# EUROPEAN PATENT APPLICATION

(11) **EP 4 821 620 A1**
(43) Date of publication of application: **14.10.2026**
(21) Application number: 24899126.7
(22) Date of filing: 30.04.2024
(51) Int. Cl.: B23B 19/02, B23B 31/02

(54) **ROTARY FORCE TRANSMISSION DEVICE AND MACHINE TOOL**

(30) Priority: 08.12.2023 CN 202323353988 U; 27.03.2024 CN 202420614168 U; 27.03.2024 CN 202420614144 U; 27.03.2024 CN 202420614108 U; 27.03.2024 CN 202410358694
(71) Applicant: GUANGDONG LUOLE INTELLIGENT TECHNOLOGY CO., LTD., Guangzhou, Guangdong 511470 (CN)
(72) Inventor: LUO, Yingxue, Guangzhou, Guangdong 511470 (CN)
(74) Representative: Herrero & Asociados, S.L.
(86) International application number: PCT/CN2024/090835
(87) International publication number: WO 2025/118474

(57) **Abstract**

A rotary force transmission device (2) and a machine tool. The rotary force transmission device (2) comprises a power connecting portion, a machine tool spindle fixing portion, a first clutch mechanism, a lead screw (21), a lead screw nut (22) and a pull rod connecting shaft (23), wherein the lead screw nut (22) matches the lead screw (21); when the lead screw (21) rotates, the lead screw nut (22) can translate forwards and backwards; the pull rod connecting shaft (23) is mounted to the lead screw nut (22) at one end of the lead screw nut; the power connecting portion is located at an input end of the lead screw (21); the machine tool spindle fixing portion is adjacent to an output end of the lead screw (21); and part of the first clutch mechanism is connected to the power connecting portion, and part of the first clutch mechanism is connected to the lead screw (21), such that the power connecting portion is in transmission connection with or is in disengaged transmission connection from the lead screw (21). The rotary force transmission device (2) can be directly, serving as one associated component, sleeved inside the machine tool spindle (41), such that the reliability is better.

## Description

### TECHNICAL FIELD

The invention relates to the technical field of chuck driving, and more particularly to a rotary power transmitter and machine tool.

### BACKGROUND

A chuck is a mechanical device on a machine tool used for clamping a workpiece. The chunk is a machine tool accessory that clamps and positions a workpiece by utilizing the radial movement of movable jaws evenly distributed on a chuck body. A chuck generally consists of three parts: a chuck body, movable jaws, and a jaw driving motor assembly. A diameter of the chuck body ranges from a minimum of 65 millimeters (mm) to a maximum of 1500 mm, with a central through hole for passing a workpiece or bar stock. The back of the chunk has a cylindrical or short tapered structure, connected directly or via a flange plate to an end of a machine tool spindle. Chucks are typically used on lathes, external grinders, and internal grinders, and can also be used with various indexing devices on milling machines and drilling machines. Mainstream chucks in the related art can be classified based on the power source used into: manual chucks, pneumatic chucks, and hydraulic chucks.

Mechanisms for driving chuck opening and closing in the related art include structures using a hydraulic power unit and a high-pressure oil cylinder. Although they have a long application history and relatively mature technology, they require a motor to compress hydraulic oil to form high pressure during production and use, which then pushes the chuck to clamp the workpiece. This energy conversion process has relatively high energy consumption and cost, and any leakage of hydraulic oil has a significant impact on the environment.

### SUMMARY

Based on this, it is necessary to provide a green, environmentally friendly, and more stable rotary power transmitter.

The invention provides a rotary power transmitter, including a power connection portion, a machine tool spindle fixing portion, a first clutch mechanism, a lead screw and a lead screw nut. The lead screw nut is matched with the lead screw. When the lead screw rotates, the lead screw nut is configured to be translated back and forth. The power connection portion is located at an input end of the lead screw. The machine tool spindle fixing portion is close to an output end of the lead screw. The first clutch mechanism is configured to make the power connection portion to be in transmission connection or disengaged from transmission connection with the lead screw.

In an embodiment, the rotary power transmitter further includes a pull rod connection shaft. The pull rod connection shaft is mounted at an end of the lead screw nut, a part of the first clutch mechanism is connected to the power connection portion, and another part of the first clutch mechanism is connected to the lead screw.

In an embodiment, the rotary power transmitter further includes a second clutch mechanism. A part of the second clutch mechanism is connected to the machine tool spindle fixing portion, and another part of the second clutch mechanism is connected to the lead screw, so that when the machine tool spindle fixing portion rotates, the lead screw is driven to rotate. Alternatively, the rotary power transmitter includes a self-locking connecting member. The machine tool spindle fixing portion is in transmission connection or disengaged from transmission connection with the lead screw via the self-locking connecting member.

In an embodiment, the rotary power transmitter further includes a speed reducer. The speed reducer is disposed between the first clutch mechanism and the lead screw. An input end of the speed reducer is in transmission connection or disengaged from transmission connection with the power connection portion via the first clutch mechanism. An output end of the speed reducer is connected to the lead screw.

In an embodiment, the rotary power transmitter further includes a second clutch mechanism. The second clutch mechanism is disposed between the input end of the speed reducer and the power connection portion. The input end of the speed reducer is in transmission connection or disengaged from transmission connection with the machine tool spindle fixing portion via the second clutch mechanism.

In an embodiment, the rotary power transmitter further includes a main housing. An end of the main housing is configured to fixedly mount a machine tool spindle, and the other end of the main housing is fixed to a housing of the speed reducer. A part of the second clutch mechanism is fixed to the housing of the speed reducer, and another part of the second clutch mechanism is fixed to the input end of the speed reducer. The second clutch mechanism has an engaged state and a disengaged state. When the second clutch mechanism is in the engaged state, the machine tool spindle rotates synchronously with the main housing, the housing of the speed reducer, and the input end of the speed reducer in sequence in that order. When the second clutch mechanism is in the disengaged state, the housing of the speed reducer and the input end of the speed reducer are disengaged from synchronous rotational connection.

In an embodiment, a protective housing is further disposed outside the rotary power transmitter, and the lead screw, the lead screw nut, the speed reducer, the first clutch mechanism and the second clutch mechanism are disposed within the protective housing.

In an embodiment, a positioning mechanism is further disposed on the protective housing. The lead screw, the speed reducer, the first clutch mechanism and the second clutch mechanism are arranged coaxially with the main housing. The positioning mechanism is configured to adjust a position of the main housing relative to the protective housing and adapt axes of the main housing and the protective housing.

The rotary power transmitter further includes a magnetic induction assembly. A part of the magnetic induction assembly is fixedly disposed on the protective housing, and another part of the magnetic induction assembly is configured to move synchronously and axially with the lead screw nut. The magnetic induction assembly is configured to limit an axial stroke of the lead screw nut.

In an embodiment, a speed reduction input shaft is disposed on the input end of the speed reducer. The first clutch mechanism includes a first clutch plate, a first rotating seat and a first magnetic base. The second clutch mechanism includes a second clutch plate, a second rotating seat and a second magnetic base. The first clutch plate is fixed to the power connection portion. The second clutch plate is fixed to the housing of the speed reducer. The first rotating seat and the second rotating seat are sleeved on and fixed to the speed reduction input shaft. The first magnetic base is configured to engage the first clutch plate with the first rotating seat or disengage the first clutch plate from the first rotating seat. The second magnetic base is configured to engage the second clutch plate with the second rotating seat or disengage the second clutch plate from the second rotating seat.

Another aspect of the invention provides a machine tool, which includes a driving motor assembly, a machine tool body, a chuck and the aforementioned rotary power transmitter. The machine tool body includes a pull rod and a machine tool spindle. The rotary power transmitter is connected to the pull rod of the machine tool body. The pull rod is configured to drive opening and closing of jaws of the chuck. The driving motor assembly is in transmission connection or disengaged from transmission connection with the rotary power transmitter. The rotary power transmitter is in transmission connection or disengaged from transmission connection with the machine tool spindle of the machine tool body.

When a workpiece needs to be clamped or released, the driving motor assembly and the rotary power transmitter are in transmission connection, and the rotary power transmitter and the machine tool spindle of the machine tool body are disengaged from transmission connection, the driving motor assembly is configured to drive the pull rod to move back and forth along an axial direction via the rotary power transmitter, so that the jaws of the chuck open or close.

When the workpiece needs to be machined, the driving motor assembly and the rotary power transmitter are disengaged from transmission connection, and the rotary power transmitter and the machine tool spindle of the machine tool body are in transmission connection, and when the machine tool spindle of the machine tool body rotates, the jaws of the chuck are driven to rotate.

In an embodiment, the rotary power transmitter includes an adapter plate. The adapter plate defines two mounting end faces and a through hole penetrating through the two mounting end faces. The through hole is configured to movably receive the pull rod therethrough. The adapter plate is further provided with a mounting mechanism, and the machine tool spindle and the rotary power transmitter are fixedly mounted on the two mounting end faces of the adapter plate via the mounting mechanism.

The mounting mechanism includes first threaded holes and second threaded holes. The first threaded holes and the second threaded holes penetrate through the two mounting end faces of the adapter plate. The main housing of the rotary power transmitter is mounted on one of the two mounting end faces of the adapter plate via the first threaded holes in cooperation with main housing fasteners. The machine tool spindle is mounted on the other one of the two mounting end faces of the adapter plate via the second threaded holes in cooperation with spindle fasteners.

The rotary power transmitter provided by the invention can be directly mounted inside the machine tool spindle of the machine tool as an associated component, and its structure has better reliability.

### BRIEF DESCRIPTION OF DRAWINGS

By describing some of embodiments of the invention shown in drawings, the above and other objectives, features, and advantages of the invention will become clearer. The same reference signs in all the figures indicate the same parts, and the figures are not intentionally scaled proportionally according to actual dimensions. The focus is on illustrating the main idea of the invention.
FIG. 1 illustrates a schematic structural diagram of a machine tool according to the invention.
FIG. 2 illustrates a schematic sectional structural diagram of the machine tool according to the invention.
FIG. 3 illustrates an enlarged view of a portion A in FIG. 2.
FIG. 4 illustrates a schematic structural diagram of a rotary power transmitter according to the invention.
FIG. 5 illustrates an enlarged view of a portion B in FIG. 4.
FIG. 6 illustrates an enlarged view of a portion C in FIG. 4.
FIG. 7 illustrates a schematic structural diagram of a machine tool according to another embodiment of the invention.
FIG. 8 illustrates an enlarged view of a portion in FIG. 7.
FIG. 9 illustrates an enlarged view of another portion in FIG. 7.
FIG. 10 illustrates a schematic structural diagram of an adapter plate according to the invention.
FIG. 11 illustrates a schematic diagram of output torque relative to pulling force according to the invention.

### Description of reference signs:

1-driving motor assembly; 2-rotary power transmitter; 4-machine tool body; 11-motor; 12-speed reducer; 21-lead screw; 22-lead screw nut; 23-pull rod connection shaft; 24-first mounting plate; 25-second mounting plate; 26-support plate; 27-flange fixing bolt; 28-first flange; 29-mounting rod; 30-nut; 31-bearing mounting seat; 32-bearing face flange; 33-protective plate; 41-machine tool spindle; 42-pull rod; 221-lead screw nut mounting sleeve; 222-limiting block; 311-bearing; 341-first magnetic base; 342-second magnetic base; 351-first clutch plate; 352-second clutch plate; 361-first rotating seat; 362-second rotating seat;
350-first clutch mechanism; 360-second clutch mechanism; 363-elastic mechanism; 364-friction plate; 365-friction plate; 13-motor mounting bracket; 14-output shaft key connection portion; 121-speed reduction input shaft; 122-shaft end nut; 34-lead screw tail end bearing; 35-bearing pressing nut; 36-main housing; 37-magnetic induction assembly; 371-inductive magnetic ring; 372-magnetic sensor; 43-spindle housing; 50-adapter plate; 51-housing mounting plate; 52-housing flange; 53-main housing fastener; 54-through hole; 55-first threaded hole; 56-second threaded hole; 60-protective housing; 61-positioning mechanism; 56-second threaded hole.

### DETAILED DESCRIPTION OF EMBODIMENTS

In order to facilitate understanding of the invention, the invention will be described more fully below with reference to the relevant accompanying drawings.

It should be noted that when an element is referred to as being "connected" to another element, it can be directly connected to the other element and integrated therewith, or there may be intervening elements present. The terms "installed," "one end," "the other end," and similar expressions used herein are for the purpose of description only.

Unless otherwise defined, all technical and scientific terms used herein have the same meaning as commonly understood by those skilled in the art to which this invention belongs. The terms used in the description herein are for the purpose of describing particular embodiments only and are not intended to be limiting of the invention. As used herein, the term "and/or" includes any and all combinations of one or more of the associated listed items.

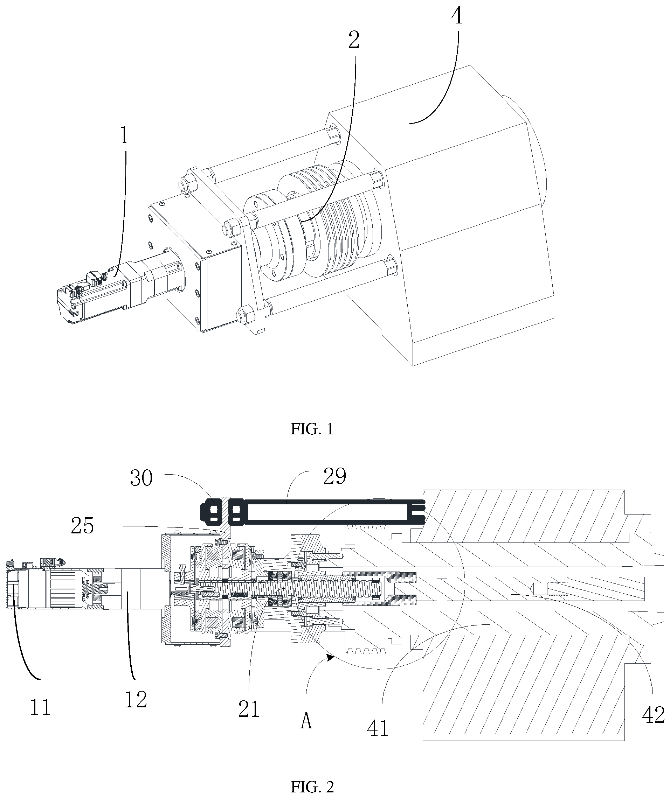

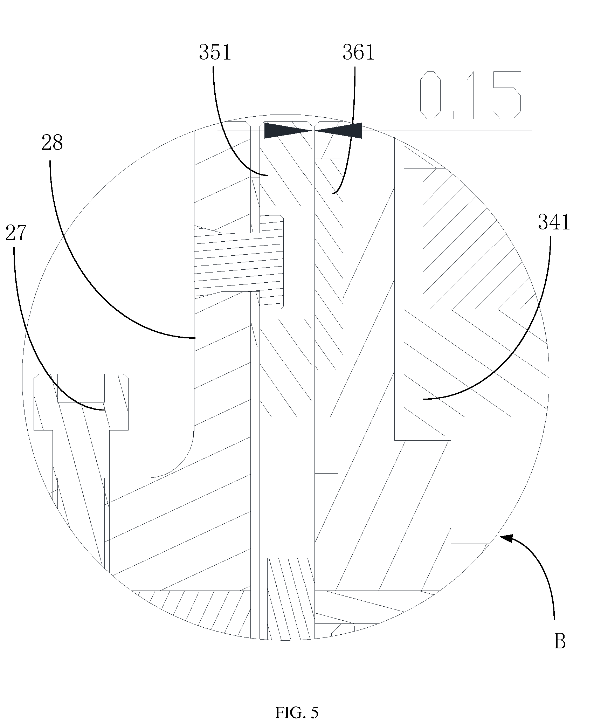

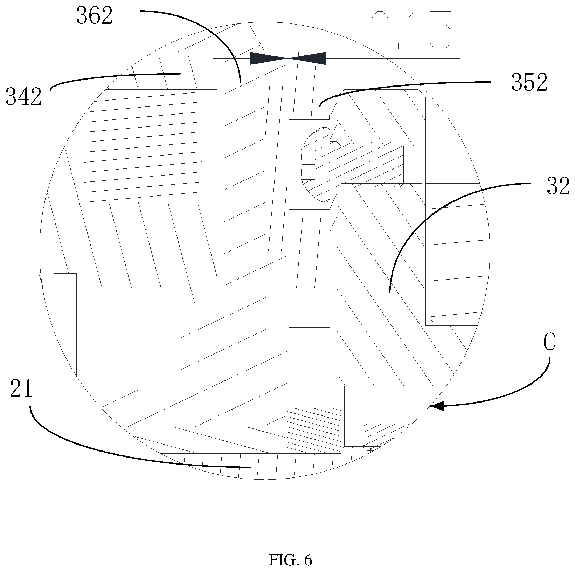

Referring to FIGS. 1-6, the invention provides a rotary power transmitter. The rotary power transmitter 2 includes a first clutch mechanism, a second clutch mechanism, a lead screw 21, a lead screw nut 22, a pull rod connection shaft 23, a power connection portion, and a machine tool spindle fixing portion. The power connection portion is configured to mount a driving mechanism. The pull rod connection shaft 23 is configured to connect a pull rod 42. The machine tool spindle fixing portion is configured to connect a spindle 41 of the machine tool.

The lead screw 21 is mounted at a center of the rotary power transmitter 2 via a bearing 311, serving as a power input shaft, which can rotate synchronously with the speed reducer 12 to provide pushing/pulling force.

The lead screw nut 22 is matched with the lead screw 21. When the lead screw 21 rotates, the lead screw nut 22 can translate back and forth. The cooperation between the lead screw 21 and the lead screw nut 22 converts rotational motion into linear motion. An end of the lead screw nut 22 is provided with an external thread for mounting the pull rod connection shaft 23. A lead screw nut mounting sleeve 221 is fixedly mounted on a bearing mounting seat 31 for radially positioning the lead screw nut , thereby preventing the lead screw nut from rotating with the lead screw while allowing axial sliding. A limiting block 222 is mounted on an end face of the lead screw for limiting and preventing the lead screw nut from over-stroking and slipping off.

An end of the pull rod connection shaft 23 is connected to the lead screw nut via a thread, and another end of the pull rod connection shaft 23 is connected to a pull rod 42 inside a machine tool spindle 41 for transmitting pushing/pulling force.

The power connection portion includes a first mounting plate 24, which is used for mounting the speed reducer of the driving mechanism.

The machine tool spindle fixing portion includes a bearing mounting seat 31, a bearing 311, and a bearing face flange 32. The bearing mounting seat 31 is sleeved on an input end side of the lead screw 21 and fixed to a pulley flange plate via bolts, and its interior is used for mounting and positioning the bearing 311. The bearing 311 is mounted inside the bearing mounting seat 31 and sleeved on an input end of the lead screw, thereby ensuring smooth rotation of the lead screw and bearing axial pulling force during clamping or releasing of the fixture. This embodiment uses a thrust ball bearing 311, but other bearings 311 such as spherical roller bearings 311 may also be used. The bearing face flange 32 is fixed to the bearing mounting seat 31 via bolts and can press and position the bearing 311.

The rotary power transmitter of the invention further includes a second mounting plate 25, a support plate 26, a flange fixing bolt 27, a first flange 28, and a protective plate 33.

The second mounting plate 25 is fixedly connected to a mounting base of the machine tool spindle 41 via a mounting rod 29 and a nut 30. The support plate 26 is configured to fix the first mounting plate 24 and the second mounting plate 25. The flange fixing bolt 27 is mounted on the first flange 28, which may be provided in multiple or a single unit. The first flange 28 is fixed to an output shaft of the speed reducer and can rotate with the speed reducer. The mounting rod and the nut fix the second mounting plate 25 to the machine tool body 4. The protective plate 33 cooperates with the support plate 26 to form a protective cover, thereby preventing foreign objects from falling inside.

In some embodiments, the first clutch mechanism and the second clutch mechanism may be electromagnetic clutches or mechanical clutches.

In an embodiment, both the first clutch mechanism and the second clutch mechanism include a magnetic base and clutch members that can be connected to or separated from each other. The magnetic base of the first clutch mechanism is referred to as the first magnetic base 341, and the magnetic base of the second clutch mechanism is referred to as the second magnetic base 342. The magnetic base is energized or de-energized to control the connection or separation of the clutch members. The magnetic base contains an energizable electromagnetic coil, which can control whether magnetic attraction is present when energized or not.

In an embodiment, the first clutch mechanism and the second clutch mechanism may adopt a normally open structure or a normally closed structure. For a normally open structure, the magnetic base is energized to connect the clutch members, and when de-energized, the clutch members are separated. For a normally closed structure, the magnetic base is energized to separate the clutch members, and when de-energized, the clutch members are connected.

Using the normally closed structure can reduce electrical energy consumption, improve clamping stability during machining, and ensure that the workpiece remains effectively clamped and does not come loose even in the event of a sudden power failure during the clamping rotation process.

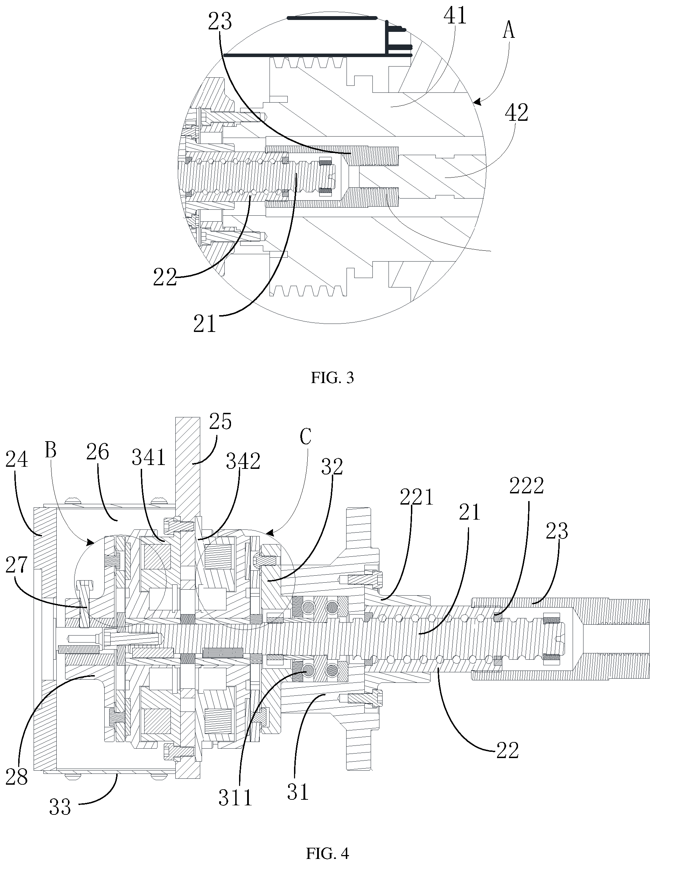

Referring to FIG. 4, in an embodiment, the magnetic bases of the first clutch mechanism and the second clutch mechanism are respectively fixed on both sides of the second mounting plate 25 and do not move with the lead screw 21 of the rotary power transmitter 2.

Referring to FIGS. 4-5, in an embodiment, the clutch members of the first clutch mechanism specifically include a first clutch plate 351 and a first rotating seat 361. The first clutch plate 351 is fixed to a driving motor assembly 1. The first rotating seat 361 is sleeved on the lead screw 21 of the rotary power transmitter 2 and can rotate with the lead screw 21. The first magnetic base 341 can control the engagement of the first clutch plate 351 with the first rotating seat 361, enabling driving connection between the driving motor assembly 1 and the lead screw 21. Specifically, the first clutch plate 351 is fixedly mounted on the first flange 28, made of a material with good magnetic conductivity. When the first clutch plate 351 is disengaged from the first rotating seat 361, there is a gap of 0.1-1 mm between the first clutch plate 351 and the first rotating seat 361, further 0.2-0.4 mm, and even 0.3 mm, with no connection between them.

The first rotating seat 361 is fixedly sleeved on an end of an input shaft of the lead screw 21 via a key and can apply the kinetic energy (torque) transmitted through the first clutch plate 351 to the lead screw 21, thereby driving the lead screw to rotate. Under the action of the magnetic base, the first clutch plate 351 can slightly deform to contact an end face of the first rotating seat, thereby transmitting the kinetic energy (torque) output by the speed reducer to the first rotating seat 361 through the combined effect of magnetic attraction and friction.

The specific working principle of the first clutch mechanism (taking the normally open structure as an example) is as follows.

Referring to FIGS. 4-6, the first clutch mechanism is mounted at a power (torque) input end of the rotary power transmitter 2. The first flange 28 and the first clutch plate 351 are fixedly connected as an integral unit and mounted and fixed on an output shaft of the speed reducer. The first rotating seat 361 is sleeved and fixed on the input end of the lead screw to ensure synchronous rotation. A gap of 0.3 mm is set between the end face of the first rotating seat 361 and the end face of the first clutch plate 351. The first electromagnetic magnetic base is fixedly mounted on the second mounting plate 25 and cannot rotate, thus it does not rotate with the lead screw of the rotary power transmitter 2. When the first electromagnetic magnetic base is energized and generates electromagnetic attraction, the end face of the first rotating seat 361 and the end face of the first clutch plate 351 engage with each other (the gap becomes 0 at this time) as an integral component. At this time, the power (torque) transmitted through the speed reducer can directly act on the lead screw, to drive the lead screw to rotate, thereby further driving the lead screw nut to slide back and forth. When the first electromagnetic magnetic base is de-energized, the magnetic force disappears, and the end face of the first rotating seat 361 and the end face of the first clutch plate 351 return to a gap of 0.3 mm. At this time, the two are independent of each other and operate without affecting each other.

Referring to FIGS. 4-6, in an embodiment, the rotary power transmitter 2 and the spindle 41 of the machine tool body 4 are in transmission connection or disengaged from transmission connection via a second clutch mechanism. The second clutch mechanism includes a second clutch plate, a second rotating seat 362, and a second magnetic base 342. The second clutch plate 352 is connected to the spindle 41 of the machine tool body 4. The second rotating seat 362 is sleeved on the lead screw 21 of the rotary power transmitter 2 and can rotate with the lead screw 21. When the second magnetic base 342 is energized or de-energized, the second clutch plate engages with the second rotating seat 362, thereby enabling transmission connection between the rotary power transmitter 2 and the spindle 41 of the machine tool body 4. After the second clutch plate is disengaged from the second rotating seat 362, there is a gap of 0.1-1 mm between the second clutch plate and the second rotating seat 362, further 0.2-0.4 mm.

The second rotating seat 362 is fixedly sleeved on a middle side of the input shaft end of the lead screw via a key and can transmit the kinetic energy (torque) originating from the lead screw to the second clutch plate.

The second clutch plate 352 is fixedly mounted on an end flange of the bearing 311, made of a material with good magnetic conductivity. When not magnetically attracted, the second clutch plate 352 maintains a distance of 0.3 mm from the second rotating seat 362, with no connection. When the second magnetic base 342 is energized and generates magnetic attraction, the second clutch plate 352 can slightly deform to contact the end face of the second rotating seat 362, fixing the lead screw and the rotary power transmitter relative to the machine tool spindle 41 through the combined effect of magnetic attraction and friction, temporarily forming an integral unit. When the lead screw provides and transmits pulling force to the pull rod 42 to clamp the workpiece for machining, the rotary power transmitter can rotate together with the machine tool spindle 41 until machining is completed. When machining is completed, the second rotating seat and the second clutch plate 352 separate, and the rotary power transmitter and the machine tool spindle 41 become two relatively movable individual parts.

The specific working principle of the second clutch mechanism is as follows.

### 1. Normally open structure

The bearing end flange 32 mounted on the middle part of the power (torque) input end of the rotary power transmitter are fixedly connected to the second clutch plate 352 as an integral unit and they are mounted and fixed on the bearing mounting seat 31. The second rotating seat 362 is sleeved and fixed on the middle part of the input end of the lead screw to ensure synchronous rotation. A gap of 0.3 mm is also set between the end face of the second rotating seat 362 and the end face of the second clutch plate 352. The second magnetic base 342 is fixedly mounted on the second mounting plate 25 and cannot rotate, thus it also does not rotate with the lead screw of the rotary power transmitter 2. When the second magnetic base 342 is energized and generates electromagnetic attraction, the end face of the second rotating seat 362 and the end face of the second clutch plate 352 engage with each other (the gap becomes 0 at this time) as an integral component. At this time, the rotary power transmitter is temporarily connected with the machine tool spindle 41 as a whole and can rotate synchronously with the rotation of the machine tool spindle 41. When the second magnetic base 342 is de-energized, the magnetic force disappears, and the end face of the second rotating seat 362 and the end face of the second clutch plate 352 return to a gap of 0.3 mm. At this time, the two are independent of each other and operate without affecting each other, enabling independent operation of the lead screw inside the rotary power transmitter while the machine tool spindle 41 is stationary.

### 2. Normally closed structure

During workpiece machining, the first rotating seat 361 in the first clutch mechanism is de-energized and separated from the first clutch plate 351, and the second rotating seat 362 in the second clutch mechanism is de-energized and engaged with the second clutch plate 352 to ensure that the rotary power transmitter is connected as a unit with the machine tool spindle 41. When workpiece machining is completed, the first rotating seat 361 in the first clutch mechanism is energized and engaged with the first clutch plate 351, and the second rotating seat 362 in the second clutch mechanism is energized and separated from the second clutch plate 352 by a gap of 0.3 mm to ensure that the rotary power transmitter 2 is temporarily disconnected from the machine tool spindle 41 and can operate independently.

In the invention, the rotary power transmission part is designed as an associated rotary power transmitter sleeved inside the machine tool spindle. The main components can rotate with the spindle rotation. The axial force generated during the pushing/pulling action acts directly on the machine tool spindle, rather than being borne by bearings, so this structure has higher reliability.

Referring to FIG. 1-3, this embodiment also provides a machine tool, including the rotary power transmitter 2 mentioned in the above embodiment, a driving mechanism, and a machine tool body. The driving mechanism includes a motor 11 and a speed reducer 12. The machine tool body includes a pull rod 42 and a spindle 41. When a workpiece needs to be clamped or released, the first clutch mechanism makes the driving motor assembly 1 and the rotary power transmitter 2 in transmission connection, and makes the rotary power transmitter 2 and the spindle 41 of the machine tool body 4 being disengaged from transmission connection. At this time, the driving motor assembly 1 can drive the pull rod 42 to move back and forth along the axial direction via the rotary power transmitter 2, so that the jaws of the chuck open or close. At this time, the rotation of the machine tool spindle 41 does not affect the rotary power transmitter 2, thereby avoiding the problem of cable winding when the machine tool spindle 41 rotates at high speed.

When the workpiece is clamped and the next step of machining is required, the driving motor assembly 1 and the rotary power transmitter 2 are disengaged from transmission connection, thus the driving force of the driving motor assembly 1 is not transmitted to the rotary power transmitter 2, thereby preventing the pull rod 42 from being pulled and causing the jaws to open. At this time, the rotary power transmitter 2 and the spindle 41 of the machine tool body 4 are in transmission connection, so that the rotary power transmitter 2 and the machine tool body 4 are combined as one unit. The rotary power transmitter 2 rotates at high speed following the machine tool spindle 41, thereby ensuring that the rotary power transmitter 2 does not loosen, preventing the rotary power transmitter 2 from loosening and causing the pull rod 42 to be pulled, which would open the jaws.

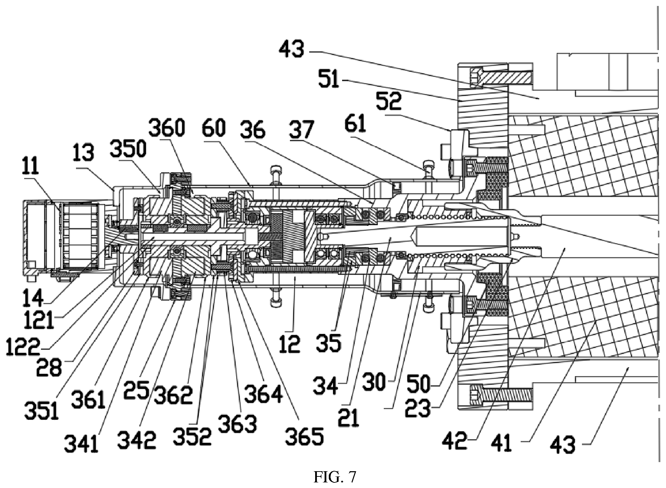

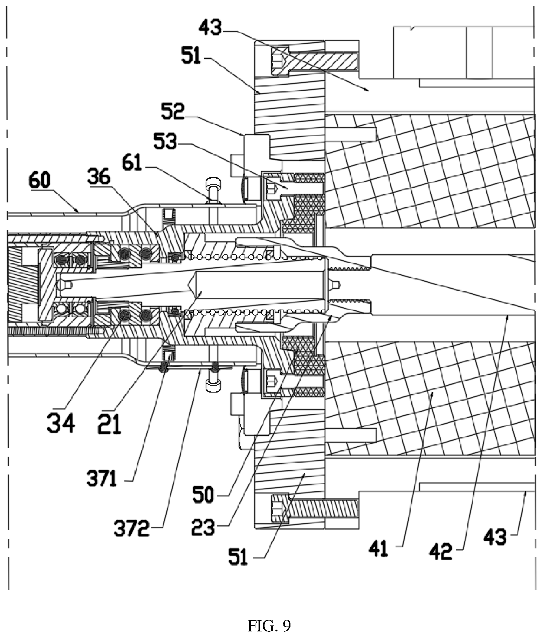

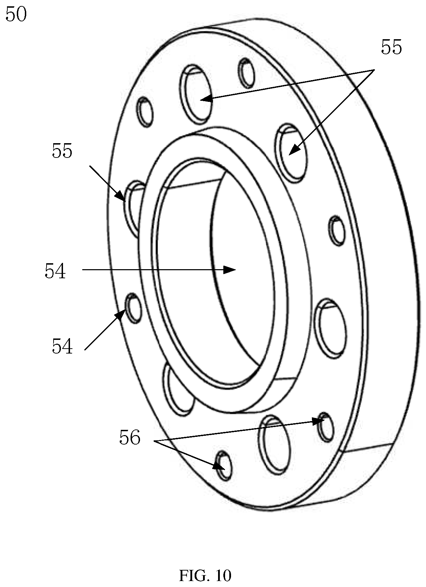

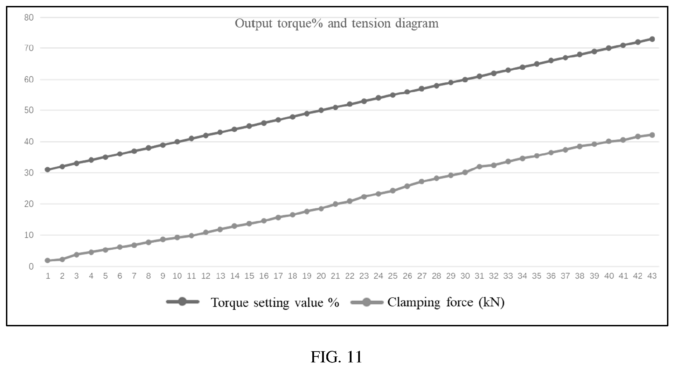

Please refer to FIGS. 7-11, another aspect of the invention provides a rotary power transmitter according to another embodiment.

The rotary power transmitter 2 includes a power connection portion, a machine tool spindle 41 fixing portion, a first clutch mechanism 350, a lead screw 21 and a lead screw nut 30. The lead screw nut 30 is matched with the lead screw 21. When the lead screw 21 rotates, the lead screw nut 30 can translate back and forth. The driving connection portion is located at an input end of the lead screw 21. The machine tool spindle fixing portion is close to an output end of the lead screw 21. The first clutch mechanism 350 enables the power connection portion to be in transmission connection or disengaged from transmission connection with the lead screw 21. The rotary power transmitter 2 further includes a speed reducer 12. The speed reducer 12 is disposed between the first clutch mechanism 350 and the lead screw 21. An input end of the speed reducer 12 and the power connection portion are in transmission connection or disengaged from transmission connection via the first clutch mechanism 350. An output end of the speed reducer 12 is connected to the lead screw 21. Through the above arrangement, a service life of the first clutch mechanism 350 is improved, thereby avoiding the first clutch mechanism 350 being disposed at the output end of the speed reducer 12 and bearing higher torque. For example, if a reduction ratio of the speed reducer 12 is 50: 1, the torque is amplified approximately 50 times. If the first clutch mechanism 350 is disposed at the output end of the speed reducer 12, it would bear torque amplified approximately 50 times.

In an embodiment, the rotary power transmitter 2 further includes a second clutch mechanism 360. The second clutch mechanism 360 is disposed between the input end of the speed reducer 12 and the power connection portion. The input end of the speed reducer 12 is in transmission connection or disengaged from transmission connection with the machine tool spindle 41 fixing portion via the second clutch mechanism 360. Through the first clutch mechanism 350 and the second clutch mechanism 360, it is ensured that the clamping process and the rotation process of the machine tool spindle 41 can be separated. The axial force generated during the pushing/pulling action acts directly on the machine tool spindle 41, rather than being borne by the bearing 311, making the structure of this embodiment more reliable. It also gives the second clutch mechanism 360 a longer service life.

Certainly, for transmission connection or disengagement between the machine tool spindle 41 and the lead screw 21, other embodiments may use a self-locking connecting member. For example, the rotary power transmitter 2 includes a self-locking connecting member, and the machine tool spindle 41 fixing portion and the lead screw 21 are in transmission connection or disengaged from transmission connection via the self-locking connecting member. The self-locking connecting member can be a self-locking structural part within a self-locking speed reducer 12, or a self-locking lead screw assembly (including a lead screw nut 30 and lead screw 21, and including a self-locking connecting member). Self-locking speed reducers 12 and self-locking lead screw assemblies are related art and are not further limited here.

In an embodiment, the rotary power transmitter 2 further includes a main housing 36. An end of the main housing 36 is used for fixedly mounting the machine tool spindle 41, and the other end of the main housing 36 is fixed to a housing of the speed reducer 12. The main housing 36 is mounted and fixed on the machine tool spindle 41 and can rotate synchronously at high speed with the machine tool spindle 41 during machining. A part of the second clutch mechanism 360 is fixed to the housing of the speed reducer 12, and another part of the second clutch mechanism 360 is fixed to the input end of the speed reducer 12, the input end of the speed reducer 12 is a speed reduction input shaft 121. The second clutch mechanism 360 has an engaged state or a disengaged state. When the second clutch mechanism 360 is in the engaged state, the machine tool spindle 41 rotates synchronously with the main housing 36, the housing of the speed reducer 12, and the input end of the speed reducer 12 (i.e., the speed reduction input shaft 121) in sequence in that order. When the second clutch mechanism 360 is in the disengaged state, the housing of the speed reducer 12 and the input end of the speed reducer 12 are disengaged from synchronous rotational connection, meaning the speed reduction input shaft 121, the housing of the speed reducer 12, the main housing 36, and the machine tool spindle 41 are all disengaged from transmission connection, thereby ensuring that the lead screw 21 is disengaged from transmission connection with the above three. At this time, if the first clutch mechanism 350 is engaged, the motor 11 and the speed reduction input shaft 121 achieve transmission connection via the first clutch mechanism 350, and forward and reverse rotation of the motor 11 can achieve clamping and releasing of the chuck.

In an embodiment, a protective housing 60 is further disposed outside the rotary power transmitter 2. The lead screw 21, the lead screw nut 30, the speed reducer 12, the first clutch mechanism 350, and the second clutch mechanism 360 are disposed within the protective housing 60. Protection refers to preventing dust, powder, water mist, and other debris from entering and protecting the components in the rotary power transmitter. The provision of the protective housing 60 prevents dust from entering the lead screw 21, the lead screw nut 30, the speed reducer 12, the first clutch mechanism 350, and the second clutch mechanism 360. The protective housing 60 improves a service life of these components and makes the rotary power transmitter 2 suitable for use in mining or other dusty environments. Furthermore, the protective housing 60 does not rotate relative to the machine tool, nor does it rotate with the machine tool spindle 41. It is used for connecting and positioning the motor 11 and for mounting and fixing the non-rotating first magnetic base 341 and second magnetic base 342 of the electromagnetic clutches.

In an embodiment, a positioning mechanism 61 is further disposed on the protective housing 60. The lead screw 21, the speed reducer 12, the first clutch mechanism 350, and the second clutch mechanism 360 are all disposed coaxially with the main housing 36, and the positioning mechanism is used to adjust the coaxiality of the axes of the above four components with the axis of the protective housing 60. The positioning mechanism 61 is used to adjust the position of the main housing 36 relative to the protective housing 60 and adapt the axes of the two, generally making the two axes lie on the same straight line.

The positioning mechanism 61 includes positioning bolts and positioning threaded holes. The positioning bolts and the positioning threaded holes cooperate with each other. The positioning threaded holes penetrate through an interior of the protective housing 60 and are arranged along a circumference of the protective housing 60. The positioning bolts penetrate through the positioning threaded holes and extend into the protective housing, thereby supporting the rotary power transmitter.

The positioning threaded holes are evenly distributed on the circumference of the protective housing 60, and the number of the positioning threaded holes can be 3 or 4 per group (circle), with 1 to 3 groups arranged axially. They are used during assembly to ensure that the center of the pull rod 42, the rotating part of the rotary power transmitter, and the protective housing 60 are coaxial. After the rotary power transmitter and the pull rod 42 are mounted on the machine tool body, the positioning bolts of the positioning mechanism can be loosened towards the protective housing 60 and fixed in position, thereby ensuring normal rotation of the pull rod 42.

In an embodiment, the rotary power transmitter 2 further includes a magnetic induction assembly 37. A part of the magnetic induction assembly 37 is fixedly disposed inside the protective housing 60, and another part of the magnetic induction assembly 37 moves synchronously and axially with the lead screw nut 30. The magnetic induction assembly 37 is used for limiting the axial stroke of the lead screw nut 30. This ensures convenient mounting and adjustment and ensures that the equipment operates within a normal stroke.

The magnetic induction assembly 37 includes an inductive magnetic ring 371 and a magnetic sensor 372. The inductive magnetic ring 371 is mounted and fixed on the lead screw nut 30, which only performs axial back-and-forth movement. The magnetic sensor 372 is mounted on the protective housing 60. The inductive magnetic ring 371 and the magnetic sensor 372 are used for limiting the axial stroke of an electric pull rod 42. Furthermore, the main housing 36 is sleeved outside the lead screw nut 30. The main housing 36 defines an avoidance hole (not shown in the drawings). The inductive magnetic ring 371 is connected to the lead screw nut 30 via a connecting rod (not shown in the drawings), and the connecting rod can move within the avoidance hole.

In an embodiment, the input end of the speed reducer 12 is provided with a speed reduction input shaft 121. The first clutch mechanism 350 includes a first clutch plate 351, a first rotating seat 361, and a first magnetic base 341. The second clutch mechanism 360 includes a second clutch plate 352, a second rotating seat 362, and a second magnetic base 342. The first clutch plate 351 is fixed to the power connection portion. The second clutch plate 352 is fixed to the housing of the speed reducer 12. The first rotating seat 361 and the second rotating seat 362 are sleeved on and fixed to the speed reduction input shaft 121. The first magnetic base 341 is capable of engaging or disengaging the first clutch plate 351 with or from the first rotating seat 361. The second magnetic base 342 is capable of engaging or disengaging the second clutch plate 352 with or from the second rotating seat 362. Further, the first magnetic base 341 and the second magnetic base 342 are fixed to the protective housing 60. The speed reduction input shaft 121 passes through the two electromagnetic clutches and the speed reducer 12 for transmitting torque. The first electromagnetic clutch adopts a normally open structure. The first electromagnetic clutch controls the torque input from the motor 11. When clamping the workpiece, it is energized to engage and transmit the output torque of the motor 11. After the workpiece is clamped and during machining, it is de-energized and disengaged, ensuring that the main part of the electric pull rod 42 can rotate at high speed with the machine tool electric spindle. The first clutch plate 351 is an electromagnetic engagement plate. The first rotating seat 361 and the first clutch plate 351 are made of materials with relatively high friction. The first magnetic base 341 is an electromagnet.

The second electromagnetic clutch (brake) adopts a normally closed structure. The second electromagnetic clutch acts as a brake during machining to maintain the clamping force of the pull rod 42 without reduction. During the process of clamping the workpiece, it is energized to engage and separate, ensuring that the pull rod 42 and the machine tool spindle 41 can rotate relatively independently to clamp the workpiece. After clamping the workpiece, it is de-energized to remove the magnetic force, and under the action of the spring, the friction plates reset and engage, allowing the electric pull rod 42 and the machine tool electric spindle to reconnect as an integrated structure capable of synchronous rotation. The second electromagnetic clutch adopts a normally closed structure. The second magnetic base 342 is an electromagnet.

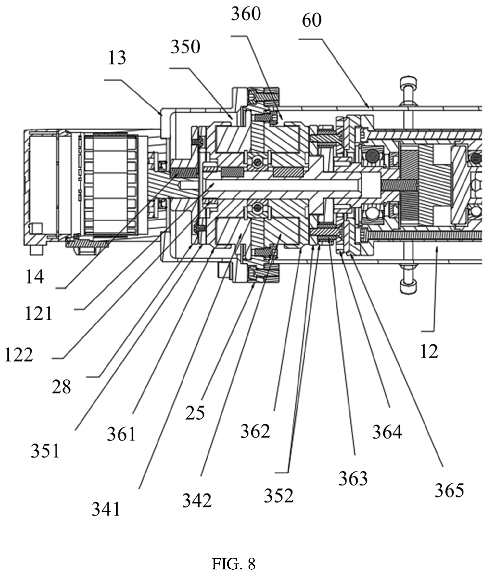

The second clutch plate 352 is an electromagnetic engagement plate. The second rotating seat 362 and the second magnetic base 342 are generally electromagnets. The second electromagnetic clutch also includes an elastic mechanism 363, a friction plate A 364, and a friction plate B 365. The elastic mechanism 363 can be a spring. The friction plate A is located to a left of the friction plate B. The second clutch plate 352 includes a clutch plate A and a clutch plate B. In FIG. 8, the two arrows on the second clutch plate 352 point to the clutch plate A and the clutch plate B respectively, with the clutch plate A located to the left of the clutch plate B. The components of the second electromagnetic clutch also have the following structures and effects.

Electromagnetic engagement plate (second rotating seat 362) is mounted on the speed reduction input shaft 121 via a key connection and can rotate with it. The end face of the electromagnetic engagement plate close to the clutch plate A is provided with a friction portion. When the electromagnetic engagement plate is engaged with the clutch plate A, it increases friction with the clutch plate A through the friction portion. When disengaged (de-energized), it interacts with the friction plate A 364 to bear the torque of the speed reduction input shaft 121.

The clutch plate A is connected to the friction plate A 364 as an integral unit via bolts, guide posts, and the elastic mechanism 363, which can be slidably sleeved onto the clutch plate B.

The clutch plate B is fixedly sleeved onto the speed reduction input shaft 121 for mounting clutch plate A, the elastic mechanism 363, and the friction plate A 364, thereby providing support for the axial movement of the clutch.

The elastic mechanism 363 is sleeved inside the clutch plate B. When not energized, under the action of elastic force, it ensures that the friction plate A 364 and the friction plate B 365 are pressed together, thereby ensuring synchronous rotation of the rotary power transmitter 2 and the machine tool spindle 41 under the action of friction force.

The friction plate A 364 is connected to the clutch plate A. When machining the workpiece, the electromagnet is not energized. At this time, under the action of the elastic mechanism 363, the friction plate A 364 axially presses against the friction plate B 365, bearing the torque from the rotation of the machine tool spindle 41. When machining is completed and the workpiece needs to be clamped, the electromagnet is energized. The clutch plate A, under the action of magnetic attraction, slides axially towards the electromagnet side, to drive the friction plate A 364 to separate from the friction plate B 365, thereby separating the machine tool spindle 41 from the rotary power transmitter 2.

The friction plate B 365 is fixedly mounted on the housing of the speed reducer 12, which can be integrated with the housing of the speed reducer 12. It combines with the friction plate A 364 to transmit the torque of the machine tool spindle 41.

A motor mounting bracket 13 is used for mounting the motor 11 and connecting the motor 11 to the body of the pull rod 42. The lead screw assembly is used for converting the rotational motion input by the motor 11 into axial motion. A housing mounting plate 51 is fixedly mounted on the non-rotating structure at the tail end of the machine tool spindle 41 via bolts. Then, the housing of the electric pull rod 42 is fixedly mounted on this mounting plate via bolts, so that the housing of the electric pull rod 42 is fixedly connected to the machine tool. The spindle housing 43 is fixed on the machine tool for mounting an electric spindle or a common spindle. The output shaft key connection portion 14 is used for connecting to the output end of the motor 11. The shaft end nut 122 is used for mounting on the input end of the connection shaft to assist in limiting the electromagnetic clutch. In an embodiment, the pull rod connection shaft 23 connects the lead screw nut 30 with the pull rod 42. This connecting sleeve may also be designed as an integral structure with the lead screw nut 30 or with the pull rod 42.

The invention also provides an adapter plate 50. The adapter plate 50 defines two mounting end faces and a through hole 54 penetrating through the two mounting end faces. The through hole 54 is used for movably receiving the pull rod 42 therethrough. The pull rod 42 passes through the through hole 54 and can move in the axial direction. The pull rod 42 is connected to the nut 30 via the pull rod 42 connection shaft 23, or the pull rod 42 and the nut 30 are integrally formed. In this case, the pull rod 42 connection shaft 23 and the nut 30 are considered as the pull rod 42, meaning this approach falls within a protection scope of the invention. The adapter plate 50 is also provided with a mounting mechanism. The machine tool spindle 41 and the rotary power transmitter 2 are mounted on the mounting end faces of the adapter plate 50 via the mounting mechanism. Due to the different structures of the mounting positions at the tail ends of the machine tool spindles 41 from various manufacturers, this adapter plate 50 is designed as a non-universal part according to requirements, allowing the pull rod 42 to be adaptably mounted and fixed on different machine tool spindles 41, and ensuring that the centers of the rotary power transmitter 2, the pull rod 42, and the machine tool spindle 41 are coaxial.

In an embodiment, the mounting mechanism includes first threaded holes 55 and second threaded holes 56. The first threaded holes 55 and the second threaded holes 56 penetrate through the two mounting end faces of the adapter plate 50. The main housing 36 of the rotary power transmitter 2 is fixedly mounted on one mounting end face of the adapter plate 50 via the first threaded holes 55 by using main housing fasteners 53. The machine tool spindle 41 is mounted on the other mounting end face of the adapter plate 50 via the second threaded holes 56 in cooperation with spindle fasteners. The main housing fasteners 53 and the spindle fasteners are fastening screws. When the machine tool spindle 41 rotates, the adapter plate 50 and the main housing 36 rotate synchronously with the machine tool spindle 41. When the pull rod 42 moves in the axial direction, the adapter plate 50 does not move with the pull rod 42. On the other hand, when the second clutch mechanism 360 is in the engaged state, the machine tool spindle 41 rotates synchronously with the main housing 36, the adapter plate 50, the housing of the speed reducer 12, and the input end of the speed reducer 12 in sequence in that order. When the second clutch mechanism 360 is in the disengaged state, the housing of the speed reducer 12 and the input end of the speed reducer 12 are disengaged from synchronous rotational connection. This facilitates the installation of the rotary power transmitter 2, the pull rod 42, and the machine tool spindle 41, ensuring that the centers of the three are coaxial, and improves the assembly accuracy of the three.

In an embodiment, a protective housing 60 is further disposed outside the rotary power transmitter 2. A housing flange 52 is fixedly mounted at an end of the protective housing 60 close to the output end of the lead screw 21. The protective housing 60 is sleeved outside the adapter plate 50. Furthermore, the housing flange 52 and the protective housing can be designed as an integral unit. The protective housing can be sleeved outside the adapter plate 50 at the tail end of the machine tool spindle 41 via bolt connection, facilitating the installation of the rotary power transmitter 2.

In an embodiment, the housing mounting plate is fixedly connected to the spindle housing 43, and the housing mounting plate is fixedly connected to the housing flange 52. The machine tool spindle 41 is mounted within the spindle housing 43. The spindle housing 43 is used for mounting the machine tool spindle 41 on the machine tool body 4. The spindle housing 43, the housing mounting plate, and the protective housing are fixed relative to the machine tool and do not rotate with the machine tool spindle 41. The housing flange 52 and the housing mounting plate improve installation efficiency. Cooperating with the positioning mechanism 61, the lead screw 21 and the pull rod 42 can be mounted coaxially, and the machine tool spindle 41 and the protective housing can be mounted coaxially.

The invention also provides an electric clamping system. The electric clamping system includes a rotary power transmitter 2. The rotary power transmitter 2 includes a power connection portion, a lead screw 21, a lead screw 21 nut 30, and an adapter plate 50. The lead screw 21 nut 30 is matched with the lead screw 21. When the lead screw 21 rotates, the lead screw 21 nut 30 can translate back and forth. The power connection portion is located at the input end of the lead screw 21, and the power connection portion is used for connecting to the motor 11. A protective housing is further disposed outside the rotary power transmitter 2. The lead screw 21 and the lead screw 21 nut 30 are disposed within a cavity of the protective housing. The protective housing protects the lead screw 21 and the lead screw 21 nut 30.

The electric clamping system also includes the above-mentioned rotary power transmitter 2, a driving motor assembly 1, and a chuck. The electric clamping system cooperates with the machine tool body 4 to form the following machine tool for machining workpieces.

In another aspect, the invention provides a machine tool, including a driving motor assembly 1, a machine tool body 4, a chuck, and the aforementioned rotary power transmitter 2. The machine tool body 4 includes a pull rod 42 and a spindle. The rotary power transmitter 2 is connected to the pull rod 42 of the machine tool body 4. The pull rod 42 is used for driving opening and closing of jaws of the chuck. The driving motor assembly 1 and the rotary power transmitter 2 are configured to be in transmission connection or disengaged from transmission connection. The rotary power transmitter 2 and the spindle of the machine tool body 4 are configured to be in transmission connection or disengaged from transmission connection. When a workpiece needs to be clamped or released, the driving motor assembly 1 and the rotary power transmitter 2 are in transmission connection, and the rotary power transmitter 2 and the spindle of the machine tool body 4 are disengaged from transmission connection. At this time, the driving motor assembly 1 is capable of driving the pull rod 42 to move back and forth along an axial direction via the rotary power transmitter 2, so that the jaws of the chuck open or close. When the workpiece needs to be machined, the driving motor assembly 1 and the rotary power transmitter 2 are disengaged from transmission connection, and the rotary power transmitter 2 and the spindle of the machine tool body 4 are in transmission connection. When the spindle of the machine tool body 4 rotates, it drives the jaws of the chuck to rotate. For an example of the machine tool of the invention, reference can be made to Chinese patent publication No. CN117620240A.

The invention has the following advantages.
1. The servo motor provides the required small torque, which is energy-saving and environmentally friendly. The motor only works during clamping (within 1 second) and releasing (within 1 second). The motor works for 2 seconds per machining cycle, which is about 3.3% of the operating time of a traditional motor (e.g., 60 seconds). The motor power is 200 watts (W), about 26% to 13% of the traditional 750 W/1500 W, saving 75% to 85%. Total energy saving is 100%-3.3%*20%=99.34%. Almost no electricity is needed; no hydraulic oil is required, being directly electrically driven.
2. Motor size comparison: traditional 1.5 kilowatts (KW) motor, traditional 0.75 KW motor, and new structure 200 W servo motor.
   Speed: 200 W servo motor, 6000 revolutions per minute (RPM), reducer ratio 30, lead screw lead 5mm, clamping stroke 10mm.
3. Clamping time T: 10/(6000/30/60*5)=0.597 seconds, plus clamping system delay 0.4 seconds, total <1.0 seconds. Release time t is the same as clamping time.
4. Pulling force (thrust) adjustment method: a clamping time is set, appropriate clamping motor speed is selected, such as 200 W Inovance servo motor, 6000 RPM. Motor torque output % is adjusted. The following are measured data: Clamping force is steplessly adjustable (via program programming), with a wide adjustment range, covering conditions from diaphragm chucks to a pulling force of 4 tons.
5. Lightweight: radial clamping force steplessly adjustable from 0.1 newtons (N) to 8000 N (clamping an egg: eggshell withstands 3.4 kilogram-force, abbreviated as kgf) is achieved.
6. According to measured data: minimum pulling force 0.42 kilonewtons (KN, 42.8kgf), maximum pulling force 42.18 KN (4.3 tons force), converted to radial clamping force of the chuck jaw (chuck slider angle 12° to horizontal) is: 73.69 N to 7400 N, converted to kgf is 7.5 to 754.3 kgf. The minimum radial clamping force can completely replace diaphragm chucks.

The comprehensive performance advantages of the invention are as follows.
1. High-speed performance: there are no components restricting the machine tool speed. Unlike rotary cylinders (pneumatic cylinders) whose limit speed is only 4500 rpm, restricting the machining workpiece spindle (i.e., the traditional spindle) to below 5000 rpm. Using this system can achieve higher speeds, such as 8000 to 9000 rpm for the workpiece spindle (collets can be used, cubic boron nitride (CBN) and polycrystalline diamond (PCD) tools can be used), greatly contributing to improving machine tool efficiency.
2. Ultra-high energy saving: saves more than 99% of electrical energy, eliminates the need for compressed gas and hydraulic oil.
3. Stepless adjustment of clamping force: using dual-mode servo control, the clamping force can be adjusted programmatically in the machine tool program. One set of devices provides stepless adjustment from 3 kilograms (kg) to 5 tons of clamping force.
4. Environmental friendliness: as no hydraulic oil is used, the problem of hydraulic oil leakage polluting the environment is avoided.
5. Strong adaptability: no longer need to consider repeatedly changing hydraulic oil of different viscosities (winter, summer) due to climate change.
6. Low maintenance rate: currently, over 30% of equipment maintenance work is related to hydraulic power units and rotary cylinders, such as water ingress in the hydraulic unit, motor repair (due to continuous operation), solenoid directional valve failure, high-pressure pipe damage, short service life of rotary cylinders, etc. However, this device does not require the above functional components, has a large design margin, and achieves low maintenance or maintenance-free operation.
7. Low usage cost: compared with a hydraulic power unit + rotary cylinder system equipped with a 0.75 KW motor, one year (24 hours (H) * 330 days (D)) can save nearly 6000 kilowatt-hour (kWh) of electricity, equivalent to 4800 yuan in electricity costs, and 1000 yuan for hydraulic oil, totaling a saving of 5500 yuan. Compared with a system equipped with a 1.5 KW motor, it saves nearly 1000 yuan annually.
8. Good environmental performance: the saved electricity also avoids the ambient temperature rise and noise caused by traditional hydraulic oil heating. It improves the comfort of the workers' working environment.
9. Low carbon: the saved electricity, hydraulic oil, and reduced maintenance contribute to lower carbon emissions, making it a green electromechanical product.

In this invention, unless otherwise clearly specified and limited, a first feature being "on" or "under" a second feature may mean that the first and second features are in direct contact, or the first and second features are in indirect contact via an intermediary medium. Moreover, a first feature being "above", "over", and "on top of" a second feature may mean that the first feature is directly above or obliquely above the second feature, or merely indicates that the horizontal height of the first feature is greater than that of the second feature. A first feature being "below", "under", and "underneath" a second feature may mean that the first feature is directly below or obliquely below the second feature, or merely indicates that the horizontal height of the first feature is less than that of the second feature.

In the description of this specification, descriptions referring to terms such as "some embodiments", "yet another embodiment", "other embodiments", or "specific examples" mean that specific features, structures, materials, or characteristics described in connection with the embodiment or example are included in at least one embodiment or example of the invention. In this specification, the schematic representations of the above terms do not necessarily refer to the same embodiment or example. Furthermore, the described specific features, structures, materials, or characteristics may be combined in any suitable manner in any one or more embodiments or examples. Additionally, those skilled in the art may combine and assemble different embodiments or examples and features of different embodiments or examples described in this specification, provided they are not mutually inconsistent.

Although the embodiments of the invention have been shown and described above, it will be understood that the above embodiments are exemplary and should not be construed as limiting the invention. Those skilled in the art may make changes, modifications, substitutions, and variations to the above embodiments within a scope of the invention.

## Claims

1. A rotary power transmitter, comprising a power connection portion, a machine tool spindle fixing portion, a first clutch mechanism, a lead screw and a lead screw nut, wherein the lead screw nut is matched with the lead screw, and when the lead screw rotates, the lead screw nut is configured to be translated back and forth; the power connection portion is located at an input end of the lead screw; the machine tool spindle fixing portion is close to an output end of the lead screw; and the first clutch mechanism is configured to make the power connection portion to be in transmission connection or disengaged from transmission connection with the lead screw.

2. The rotary power transmitter as claimed in claim 1, further comprising a pull rod connection shaft, wherein the pull rod connection shaft is mounted at an end of the lead screw nut, and a part of the first clutch mechanism is connected to the power connection portion, and another part of the first clutch mechanism is connected to the lead screw.

3. The rotary power transmitter as claimed in claim 1, further comprising a second clutch mechanism, wherein a part of the second clutch mechanism is connected to the machine tool spindle fixing portion, and another part of the second clutch mechanism is connected to the lead screw, to drive the lead screw to rotate when the machine tool spindle fixing portion rotates; or
the rotary power transmitter comprises a self-locking connecting member, and the machine tool spindle fixing portion is in transmission connection or disengaged from transmission connection with the lead screw via the self-locking connecting member.

4. The rotary power transmitter as claimed in claim 1, further comprising a speed reducer, wherein the speed reducer is disposed between the first clutch mechanism and the lead screw; an input end of the speed reducer is in transmission connection or disengaged from transmission connection with the power connection portion via the first clutch mechanism; and an output end of the speed reducer is connected to the lead screw.

5. The rotary power transmitter as claimed in claim 4, further comprising a second clutch mechanism, wherein the second clutch mechanism is disposed between the input end of the speed reducer and the power connection portion; and the input end of the speed reducer is in transmission connection or disengaged from transmission connection with the machine tool spindle fixing portion via the second clutch mechanism.

6. The rotary power transmitter as claimed in claim 5, further comprising a main housing, wherein an end of the main housing is configured to fixedly mount a machine tool spindle, and the other end of the main housing is fixed to a housing of the speed reducer; a part of the second clutch mechanism is fixed to the housing of the speed reducer, and another part of the second clutch mechanism is fixed to the input end of the speed reducer; the second clutch mechanism has an engaged state and a disengaged state; when the second clutch mechanism is in the engaged state, the machine tool spindle rotates synchronously with the main housing, the housing of the speed reducer, and the input end of the speed reducer in sequence in that order; when the second clutch mechanism is in the disengaged state, the housing of the speed reducer and the input end of the speed reducer are disengaged from synchronous rotational connection.

7. The rotary power transmitter as claimed in claim 6, wherein a protective housing is further disposed outside the rotary power transmitter, and the lead screw, the lead screw nut, the speed reducer, the first clutch mechanism and the second clutch mechanism are disposed within the protective housing.

8. The rotary power transmitter as claimed in claim 7, wherein a positioning mechanism is further disposed on the protective housing; the lead screw, the speed reducer, the first clutch mechanism and the second clutch mechanism are arranged coaxially with the main housing; and the positioning mechanism is configured to adjust a position of the main housing relative to the protective housing and adapt axes of the main housing and the protective housing; and
the rotary power transmitter further comprises a magnetic induction assembly, wherein a part of the magnetic induction assembly is fixedly disposed on the protective housing, and another part of the magnetic induction assembly is configured to move synchronously and axially with the lead screw nut; and the magnetic induction assembly is configured to limit an axial stroke of the lead screw nut.

9. The rotary power transmitter as claimed in claim 6, wherein a speed reduction input shaft is disposed on the input end of the speed reducer; the first clutch mechanism comprises a first clutch plate, a first rotating seat and a first magnetic base; the second clutch mechanism comprises a second clutch plate, a second rotating seat and a second magnetic base; the first clutch plate is fixed to the power connection portion; the second clutch plate is fixed to the housing of the speed reducer; the first rotating seat and the second rotating seat are sleeved on and fixed to the speed reduction input shaft; the first magnetic base is configured to engage the first clutch plate with the first rotating seat or disengage the first clutch plate from the first rotating seat; and the second magnetic base is configured to engage the second clutch plate with the second rotating seat or disengage the second clutch plate from the second rotating seat.

10. A machine tool, comprising a driving motor assembly, a machine tool body, a chuck and the rotary power transmitter as claimed in claim 1, wherein the machine tool body comprises a pull rod and a machine tool spindle; the rotary power transmitter is connected to the pull rod of the machine tool body; the pull rod is configured to drive opening and closing of jaws of the chuck; the driving motor assembly is in transmission connection or disengaged from transmission connection with the rotary power transmitter; and the rotary power transmitter is in transmission connection or disengaged from transmission connection with the machine tool spindle of the machine tool body;
when a workpiece is to be clamped or released, the driving motor assembly and the rotary power transmitter are in transmission connection, and the rotary power transmitter and the machine tool spindle of the machine tool body are disengaged from transmission connection, the driving motor assembly is configured to drive the pull rod to move back and forth along an axial direction via the rotary power transmitter, to make the jaws of the chuck open or close; and
when the workpiece is to be machined, the driving motor assembly and the rotary power transmitter are disengaged from transmission connection, and the rotary power transmitter and the machine tool spindle of the machine tool body are in transmission connection, and when the machine tool spindle of the machine tool body rotates, the jaws of the chuck are driven to rotate.

11. The machine tool as claimed in claim 10, wherein the rotary power transmitter comprises an adapter plate, the adapter plate defines two mounting end faces and a through hole penetrating through the two mounting end faces, the through hole is configured to movably receive the pull rod therethrough; the adapter plate is further provided with a mounting mechanism, and the machine tool spindle and the rotary power transmitter are fixedly mounted on the two mounting end faces of the adapter plate via the mounting mechanism; and
wherein the mounting mechanism comprises first threaded holes and second threaded holes, the first threaded holes and the second threaded holes penetrate through the two mounting end faces of the adapter plate; the main housing of the rotary power transmitter is mounted on one of the two mounting end faces of the adapter plate via the first threaded holes in cooperation with main housing fasteners; and the machine tool spindle is mounted on the other one of the two mounting end faces of the adapter plate via the second threaded holes in cooperation with spindle fasteners.
